(19) Europäisches Patentamt

European Patent Office

Office européen des brevets

(11) Veröffentlichungsnummer : **0 320 442 B1**

# (12) EUROPÄISCHE PATENTSCHRIFT

(45) Veröffentlichungstag der Patentschrift :
**15.04.92 Patentblatt 92/16**

(51) Int. Cl.$^5$ : **G01B 7/02, H01P 7/10**

(21) Anmeldenummer : **88810789.3**

(22) Anmeldetag : **16.11.88**

(54) Verwendung eines dielektrischen Mikrowellen-Resonators und Sensorschaltung.

(30) Priorität : **27.11.87 CH 4625/87**

(43) Veröffentlichungstag der Anmeldung :
**14.06.89 Patentblatt 89/24**

(45) Bekanntmachung des Hinweises auf die
Patenterteilung :
**15.04.92 Patentblatt 92/16**

(84) Benannte Vertragsstaaten :
**AT CH DE FR GB IT LI SE**

(56) Entgegenhaltungen :
**EP-A- 0 064 000
EP-A- 0 190 613
DE-B- 2 503 560
DE-B- 2 747 539**

(56) Entgegenhaltungen :
**DE-B- 3 325 287
US-A- 4 019 161
SOVIET INVENTIONS ILLUSTRATED, Woche
8340, 16. November 1983, Sektion S, Klasse S,
Nr. 83-782207/40, Derwent Publicationen
GmbH, London, GB; & SU-A-981 829 (DNEPRO-
PETROVSK ARTEM MIN) 18-12-1982**

(73) Patentinhaber : **Schmall, Karl-Heinz
Waldstrasse 20
W-7570 Baden-Baden 19 (DE)**

(72) Erfinder : **Schmall, Karl-Heinz
Waldstrasse 20
W-7570 Baden-Baden 19 (DE)**

(74) Vertreter : **Hepp, Dieter et al
Hepp, Wenger & Partner AG Marktgasse 18
CH-9500 Wil (CH)**

**Beschreibung**

Die Erfindung betrifft die Verwendung eines dielektrischen Mikrowellen-Resonators gemäss Patentanspruch 1 bzw. eine Sensorschaltung gemäss Oberbegriff von Patentanspruch 5.

Kapazitive Sensoren oder induktive Sensoren zur Positionsermittlung sind seit langem bekannt und gebräuchlich. Bei derartigen Sensoren wird die Kapazität zwischen dem Sensor und einem Werkstück oder die vom Werkstück beeinflusste Sensor-Induktivität als frequenzbestimmendes Bauteil eines Schwingkreises angeordnet. Derartige Sensoren sind z.B. beschrieben in der GB-A-2 085 594, der EP-A-0016638, der DE-A-19 28 899, der DE-A-27 47 539, der US-PS-4,015,101, der US-PS-3,171,071 sowie einer Vielzahl anderer Literaturstellen, die zum Teil auch auf den vorliegenden Anmelder zurückgehen. Bekanntlich sind derartige kapazitive oder induktive Sensoren beschränkt auf die Anwendung im Zusammenhang mit elektrisch leitfähigen bzw. metallischen Körpern. Veränderung der Relativlage des kapazitiven oder induktiven Sensors relativ zum metallischen Objekt führt zur Aenderung der Induktivität bzw. der Kapazität und damit zur Frequenzänderung. Diese wird in bekannten Auswertungsschaltungen (z.B. Bandfiltern, Diskriminatoren etc.) ermittelt und zur Erzeugung von Signalen verwertet, die der Relativlage des Sensors entsprechen.

Ans SOVIET INVENTIONS ILLUSTRATED Woche 8340, Sektion S, Klasse S Nr. 83-782207/40 ist die Verwendung eines Mikrowellensenders zum Ermitteln von Füllstandshöhen in einem Behälter bekannt.

Meist werden bei solchen Sensoren kleine Abmessungen gefordert. Dementsprechend stehen nur sehr kleine Sensor-Kapazitäten oder Sensor-Induktivitäten zur Verfügung. Die Zuleitungen zu den Sensoren weisen jedoch ebenfalls kapazitive und induktive Eigenschaften auf. So fallen vor allem Leitungs-Kapazitäten ins Gewicht, die wesentlich grösser sein können, als die effektive Sensorkapazität selbst. Dadurch können sowohl die Sensorempfindlichkeit als auch das allgemeine Stabilitätsverhalten solcher Sensoren ungünstig beeinflusst werden.

Es ist seit geraumer Zeit bekannt, dielektrische Resonatoren als Filter-Bauelemente in Hochfrequenzschaltungen oder als Oszillatoren einzusetzen. Die Betriebsfrequenz solcher Resonatoren liegt im Mikrowellen- bzw. im GHz-Bereich. In entsprechenden Schaltungsanordnungen wird das elektromagnetische Feld der dielektrischen Resonatoren genutzt, um zwei Schaltungsteile selektiv zu koppeln, so dass entweder ein frequenzabhängiges Dämpfungsverhalten einer Filterschaltung entsteht oder aber durch die besonderen elektromagnetischen Eigenschaften des Resonators eine bestimmte Frequenz in einer Schwingschaltung sich diskret ausbildet. Insofern werden dielektrische Resonatoren im Ersatzschaltbild als LC-Schwingschaltung dargestellt.

Zur Feinabstimmung einer solchen Schaltung, die mit einem dielektrischen Resonator ausgerüstet ist, wird z.B. ein Metallteil verwendet (z.B. eine Schraube), das an den Resonator angenähert werden kann, um dessen elektromagnetisches Feld zu beeinflussen.

Ein im Markt befindlicher Typ solcher Resonatoren ist z.B. beschrieben in Siemens Components 25 (1987) Heft 2, S.86.

Aus der EP-A-0 0190 613 sind dielektrische Mikrowellen-Resonatoren als koppelglieder zwischen abgeschlossenen Wellenleitern bekannt.

Der Erfindung liegt die Aufgabe zugrunde, die Nachteile bekannter Sensorschaltungen zu vermeiden, insbesondere also bei einfachem und kleinem Aufbau eine von Umgebungseinflüssen und Leitungskapazitäten bzw. Leitungsinduktivitäten weitgehend unabhängige Sensoranordnung zu ermöglichen. Erfindungsgemäss wird dies durch die Verwendung eines Mikrowellen-Resonators als Sensor gemäss Anspruch 1 bzw. durch eine Sensorschaltung gemäss kennzeichnendem Teil von Anspruch 5 erreicht.

In den zur Schwingungserzeugung verwendeten Oszillatoren bzw. Schwingschaltungen sind selbstverständlich auch bei der erfindungsgemässen Anordnung LC-Glieder zur Erreichung der Oszillations-Bedingungen vorgesehen. Ueberraschenderweise hat es sich aber gezeigt, dass nicht die Einbeziehung dieser L-oder C-Glieder als Sensor-Elemente zu optimalen Bedingungen führt, wie dies seit Jahrzehnten angenommen und in der Praxis verwirklicht wurde. Vielmehr sind die genannten LC-Schaltungen bei erfindungsgemässer Anordnung als nicht durch Relativlage-Veränderung des Objekt beeinflussbares Bauteil vorgesehen. Stattdessen wird vorgeschlagen, einen Mikrowellen-Resonator zusätzlich als frequenzbestimmendes Bauteil und als Sensor einzusetzen. Dies erlaubt die Ankopplung über abgeschlossene Leitungen, deren Länge praktisch unkritisch ist. Bei geeigneter Einkopplung/Auskopplung (Vielfache von Lambda bzw. Lambda/2) werden Leitungsverluste, vor allem Frequenzbeeinflussung durch Leitungs-Kapazitäten oder -Induktivitäten minimiert.

Auch wird der Resonator durch andere Störeinflüsse, insbesondere die Annäherung metallischer Teile (z.B. bei Robotern) nicht in gleichem Ausmass gestört, wie dies bei kapazitiven oder induktiven Sensoren der Fall ist. Einerseits lässt sich der Resonator durch entsprechende Gehäuse besser gegen Einflüsse abschirmen, die ausserhalb des Objekterfassungsbereichs liegen. Kapazitäts-Veränderungen durch z.B. seitliche Annäherung eines Maschinen- oder Roboterteils beeinflussen dann die Resonatorfrequenz nicht. Andererseits bleibt die Veränderung der Resonatorfrequenz in Abhängigkeit von der Objekt-Annäherung auch beim Auftreten von Störgrössen konstant. Die beiden Frequenzänderungen (durch Objekt- und durch Störobjektannäherung verursacht) addieren sich lediglich. Dagegen wird bei kapazitiven Sensoren die nutzbare Frequenzänderung durch Aenderung der Sensorkapazität zunehmend kleiner, je grösser der Einfluss von Störkapazitäten wird. Das heisst, die Empfindlichkeit bekannter Sensoren nimmt mit zunehmenden Störgrössen ab, während bei der Erfindung lediglich eine Verschiebung des Frequenzbereichs des Resonators zu erwarten ist.

Als überraschender, grosser technischer Fortschritt ergibt sich dabei, dass durch die Verwendung eines Resonators nicht nur die Sensor-Position zu metallischen Körpern sondern auch zu nichtleitenden Objekten bestimmbar wird. Bekanntlich wird die Eigenfrequenz eines Resonators durch Annäherung metallischer Körper erhöht, durch dielektrische Körper jedoch abgesenkt. Die Erfindung erschliesst damit auf nicht vorhersehbare Weise völlig neue Anwendungsgebiete für berührungslose Sensoren.

Die Kopplung zwischen Resonator und Wellenleiter lässt sich z.B. direkt durch Koppelschleifen, oder eine Mikro-Streifenleitung erreichen. Es sind auch andere Kopplungsarten denkbar, so z.B. die Verwendung eines zusätzlichen Resonators als Kopplungs-Element. Als Wellenleiter lässt sich jede Art der abgeschlossenen Leitung unter Berücksichtigung des hohen Frequenzbereichs verwenden. Bewährt haben sich z.B. Koaxial-oder Streifenleitungen.

Als Sensor kann sowohl ein einzelner Resonator (z.B. zur Abstandsmessung) als auch vorteilhafterweise eine Mehrzahl von Resonatoren verwendet werden.

Der Resonator kann dabei vorteilhafterweise als frequenzbestimmendes Element der Schwingschaltung selbst angeordnet sein. Dabei sind sowohl Diodenoszillatoren als auch Transistoroszillatoren einsetzbar.

Vor allem in komplexen Anwendungsgebieten, wie z.B. beim Einsatz mehrerer Resonatoren kann es vorteilhaft sein, wenn der Resonator bzw. die Resonatoren als Filter an den Ausgang wenigstens einer Oszillator-Schaltung angeschlossen ist bzw. sind. Durch Relativlage-Veränderungen wird das Filter-Verhalten der vorteilhafterweise auf verschiedene Frequenzen abgestimmten Resonatoren beeinflusst, so dass entsprechende selektive Frequenzauswertung Schlüsse auf die Relativlage einzelner Resonatoren zulässt.

Ersichtlicherweise wird durch die Veränderung der Relativlage des Sensors vor allem die Resonanzfrequenz des Resonators beeinflusst. Ausserdem wird auch die Kopplung zwischen Wellenleiter und Resonator bzw. zwischen verschiedenen Resonatoren und die Güte sowie die Leitungs-Impedanz an der Stelle des Resonators beeinflusst. Je nach Schaltungsaufbau kann deshalb Objektannäherung nicht nur zu einer Frequenz-Aenderung sondern auch zu einer Amplituden-Aenderung oder einer Phasenänderung führen, die durch entsprechend frequenzselektive, amplitudenselektive oder phasenselektive Auswertungsschaltungen auswertbar sind.

Vor allem die Verwendung des Resonators bzw. von zwei oder mehreren Resonatoren als Filter/Bandfilter mit einer von der Relativlage zum Objekt abhängigen Dämpfungs-Kurve ermöglicht die Realisierung hochempfindlicher Schaltungen mit nach Betrag und Phase veränderlichen Ausgangssignalen. Wesentlich ist für alle Ausführungsformen, dass die als Zuleitung zum Resonator verwendeten Wellenleiter abgeschlossen sind, d.h. dass der Abschluss-Widerstand dem Wellenwiderstand der Leitung entspricht.

Vor allem zur Erzeugung komplexer abstands-/lage-selektiver Signale kann es vorteilhaft sein, wenn die Oszillatoranordnung mehrere Frequenzen erzeugt. Von diesen können jeweils bestimmte Frequenzen entsprechend der Relativlage-Veränderung zwischen Resonatoren und Objekt bevorzugt oder gedämpft werden, so dass es erfindungsgemäss möglich ist, sowohl eine bestimmte Frequenz über deren Dämpfung als Führungsgrösse für ein absolutes Abstandssignal zu verwenden, als auch andere Frequenzen als zusätzliche abstandsselektive/positionsselektive Zusatzsignale über den Wellenleiter an den bzw. die dielektrischen Resonatoren zu koppeln.

Insgesamt ermöglicht die Erfindung die Realisierung wesentlich verbesserter Sensorschaltungen und erlaubt darüberhinaus die berührungslose Relativlage-Ermittlung zu metallischen und auch dielektrischen Objekten, was bisher als nicht erreichbar galt.

Die Erfindung ist im folgenden in Ausführungsbeispielen anhand der Zeichnungen näher erläutert. Es zeigen:

Figur 1 Die schematische Darstellung eines Näherungs-Sensors mit den Merkmalen der Erfindung,
Figur 2 die Feldverteilung auf einem dielektrischem Resonator,
Figur 3 die Prinzipdarstellung einer Resonator-Ankopplung,
Figur 4 die schematische Darstellung einer Sensor-Anordnung, bei welcher der Sensor als Filter geschaltet ist,
Figur 5 ein abgewandeltes Ausführungsbeispiel mit einem Resonator als frequenzbestimmendes Element einer Schwingschaltung,
Figur 6 ein Ausführungsbeispiel der Erfindung mit vier als Filter geschalteten Resonatoren, und
Figur 7 und Figur 8 die schematische Darstellung von zwei Sensor-Resonatoren zur Spalt-Nachführung

3

über einem Objekt mit jeweiligem Frequenz/Dämpfungs-Verhalten.

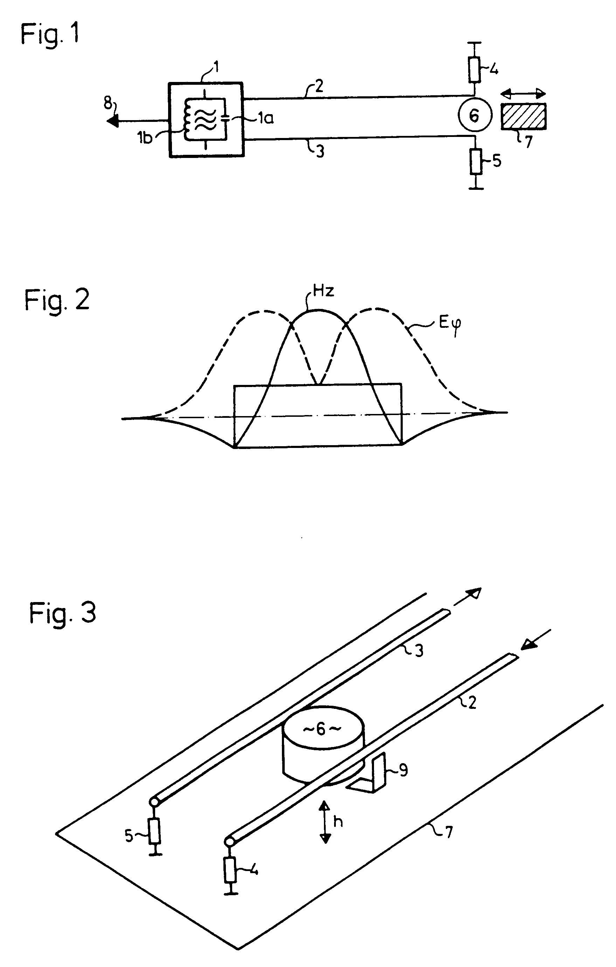

Gemäss Figur 1 ist eine Oszillator-Schaltung 1 mittels Wellenleitern 2 und 3 an einen dielektrischen Mikrowellen-Resonator 6 angekoppelt. Der Resonator 6 ist ein herkömmliches Keramik-Bauteil aus Zirkon-Zinntitanat. Selbstverständlich lassen sich auch andere Resonator-Typen einsetzen. Die Wellenleiter 2 sind an ihrem Ende mit Abschlusswiderständen 4 und 5 versehen. Die Abschlusswiderstände 4 und 5 sind entsprechend dem Wellenwiderstand der Leitung dimensioniert, so dass im Idealfall reflexionsfreies Verhalten der Wellenleiter 2, 3 erreicht wird. Der Resonator 6 ist derart in die Oszillator-Schaltung mit einbezogen, dass die Resonator-Frequenz die Eigenfrequenz des Oszillators 1 bestimmt. Dabei werden die Wellenleiter 2 und 3 durch den Resonator 6 gekoppelt. Dieser dreht die Phase des Eingangssignales vom Wellenleiter 2 so, dass am Wellenleiter 3 eine um 180° phasenverschobene Spannung erscheint. Damit wird die Resonanzbedingung hinsichtlich der Phase erfüllt.

Ein schematisch angedeuteter metallischer Körper 7 ist in seiner Relativlage zum Sensor 6 veränderlich angeordnet. Durch Abstandsänderung wird das elektromagnetische Feld des Resonators verändert. Dadurch ändert sich die Resonanzfrequenz des Resonators 6, welcher die Eigenfrequenz des Oszillators 1 entsprechend "mitzieht". Damit ändert sich die Frequenz des Oszillators 1 am Ausgang 8. Diese Frequenzänderung kann durch nicht dargestellte, herkömmliche Auswertungsschaltungen in weiterverarbeitbare Signale umgewandelt werden, welche der Frequenz des Oszillators 1 bzw. des Resonators 6 und damit dem Abstand zwischen Resonator 6 und Körper 7 entsprechen.

Die Wellenleiter 2 und 3 sind beim Ausführungsbeispiel als Streifenleitung ausgebildet. Ersichtlicherweise lässt sich jede andere Form eine abgeschlossenen Leiterung verwenden, sofern Kopplung zum Resonator 6 möglich bleibt.

Aus Figur 1 ist der wesentliche Unterschied zu bekannten Sensor-Schaltungen besonders gut ersichtlich: Bei diesem Ausführungsbeispiel der Erfindung wird nicht die schematisch dargestellte Kapazität 1a oder die Induktivität 1b des Oszillators 1 ganz oder teilweise als Sensor verwendet, sondern der zusätzlich vorgesehene Resonator 6.

Figur 2 zeigt schematisch den Resonator 6 in Seitenansicht, wobei die Amplituden des magnetischen Felds ($H_z$) und des elektrischen Felds ($E_{Phi}$).

Figur 3 zeigt eine Prinzipskizze, bei welcher der Resonator 6 ebenfalls zum Verkoppeln der beiden Leitungen 2 und 3 verwendet wird. Die Leitung 2 ist dabei mit einem nicht dargestellten Oszillator verbunden, während die Leitung 3 an einen ebenfalls nicht dargestellten Verstärker und eine entsprechende Auswertungsschaltung angeschlossen ist. Leitung 2 und Leitung 3 sind durch die Abschlusswiderstände 4 und 5 abgeschlossen. Der Resonator 6 ist ausserdem mit einer Einrichtung zur Feinabstimmung 9 in Form eines Blechstreifens versehen. Der Blechstreifen kann durch nicht dargestellte Mittel, z.B. eine Abstimm-Schraube in seinem Abstand zum Resonator 6 verändert werden, wodurch die Resonator-Frequenz abgeglichen werden kann. Unterhalb des Resonators 6 ist ein dielektrischer Körper 7, z.B. eine Kunststoffplatte, angedeutet. Bei Annäherung des Resonators 6 an die Kunststoffplatte 7 sinkt die Frequenz des Resonators 6, bei Vergrösserung des Abstands steigt sie dagegen an. Dementsprechend verändert sich auch das durch die Eigenfrequenz des Resonators 6 bestimmte Kopplungs- bzw. Filterverhalten zwischen Leitung 2 und Leitung 3.

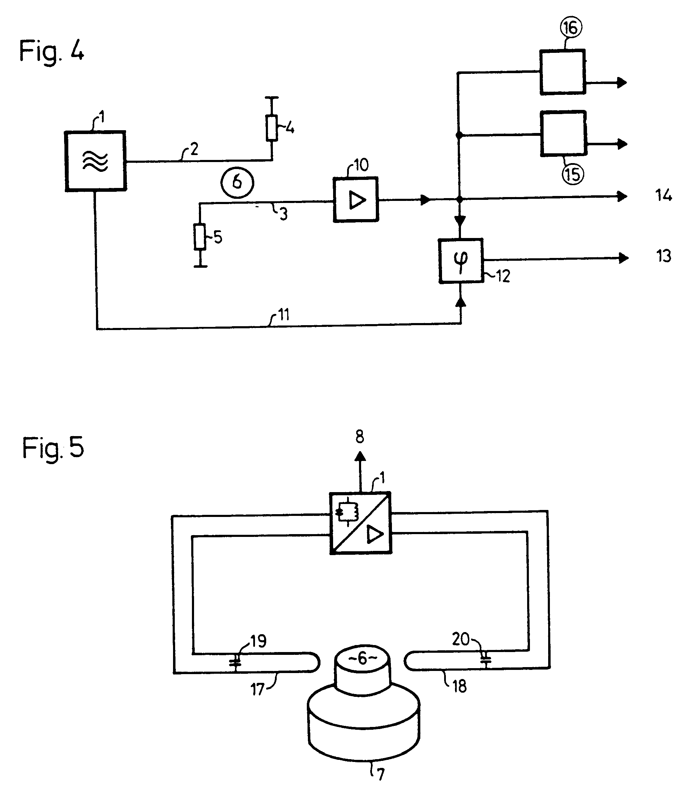

Figur 4 zeigt eine Schaltungsanordnung mit einem Resonator 6 zum Koppeln von bzw. als Filterelement zwischen Leitung 2 und Leitung 3. Leitung 2 ist an den Ausgang einer Oszillator- Schaltung 1 angeschlossen. Leitung 3 ist über einen Verstärker 10 an eine nachstehend noch näher erläuterte Auswertungsschaltung angeschlossen. Die Leitungen 2 und 3 sind wie bei den vorhergehenden Ausführungsbeispielen durch Abschlusswiderstände 4 und 5 reflexionsfrei abgeschlossen. Der Oszillator ist in herkömmlicher Weise so ausgebildet, dass er, je nach Anwendungsfall eine oder mehrere Frequenzen an die Leitung 2 abgeben kann. Das durch den Resonator 6 auf die Leitung 3 übertragene Signal wird im Verstärker 10 auf auswertbare Amplitude angehoben. Ueber eine Leitung 11 wird ausserdem vom Oszillator 1 ein Referenzsignal einem Phasenauswerter 12 zugeführt. Der Phasenauswerter 12 ist mit seinem zweiten Vergleichs-Eingang mit dem Ausgang des Verstärkers 10 verbunden. Am Ausgang 13 erscheint deshalb ein den Resonatorzustand kennzeichnendes Ausgangssignal, welches die Phasenverschiebung zwischen dem im Oszillator 1 ursprünglich erzeugten Signal und dem über den Resonator 6 gekoppelten Signal darstellt. Am Amplituden-Ausgang 14 liegt dagegen ein Signal an, dass der Amplitude des vom Resonator 6 übertragenen Signals entspricht. Höchste Amplitude wird sich dabei einstellen, wenn die Frequenz des Resonators 6 vollständig mit der Frequenz des Oszillators 1 übereinstimmt. Je stärker der Resonator 6 verstimmt wird und je mehr die beiden Phasen voneinander abweichen, desto schlechter wird das Kopplungsverhalten des Resonators 6 zwischen Leitung 2 und Leitung 3 und desto geringer wird das am Ausgang 14 anstehende Signal. Mit dem Ausgang des Verstärkers 10 sind ausserdem zwei frequenzselektive Schaltungen 15, 16 verbunden. Diese Schaltungen können z.B. durch Bandfilter oder Diskriminatoren realisiert werden. Die beiden Schaltungen 15 und 16 können in bekannter Weise auf vorherbestimmbare Frequenzen so abgestimmt werden, dass sie jeweils dann ein Ausgangssignal abgeben, wenn der Resonator 6 die vorbestimmte Frequenz erreicht. Damit lassen sich vorherbestimmbare Grenz- oder Schwellwerte anzeigen, welche einem bestimmten Zustand des elektromagnetischen Felds des Resonators infolge von äusseren Objektbeeinflussungen entsprechen.

Figur 5 zeigt ein Ausführungsbeispiel, bei welchem der Resonator 6 als Teil einer Schwingschaltung vorgesehen ist. Der Resonator 6 wird dabei von einer Leiterschleife 17 erregt und gibt an eine zweite Leiterschleife 18, mit welche er ebenfalls gekoppelt ist, ein entsprechendes Signal weiter. Beide Leiterschleifen 17, 18 sind mit Kondensatoren 19, 20 als Resonanzglieder beschaltet, um störende Nebenresonanzen zu vermeiden. In den Oszillator 1, an welchen die Leiterschleifen 17, 18 angeschlossen sind, ist ein Verstärker in bekannter Weise derart integriert, dass die Eigenschwingungsbedingungen nach Betrag und Phase in bekannter Weise eingehalten werden. Am Ausgang 8 des Oszillators 1 liegt die Ausgangsfrequenz an, die durch den Resonator 6 bzw. dessen Relativlage zum Körper 7 bestimmt wird.

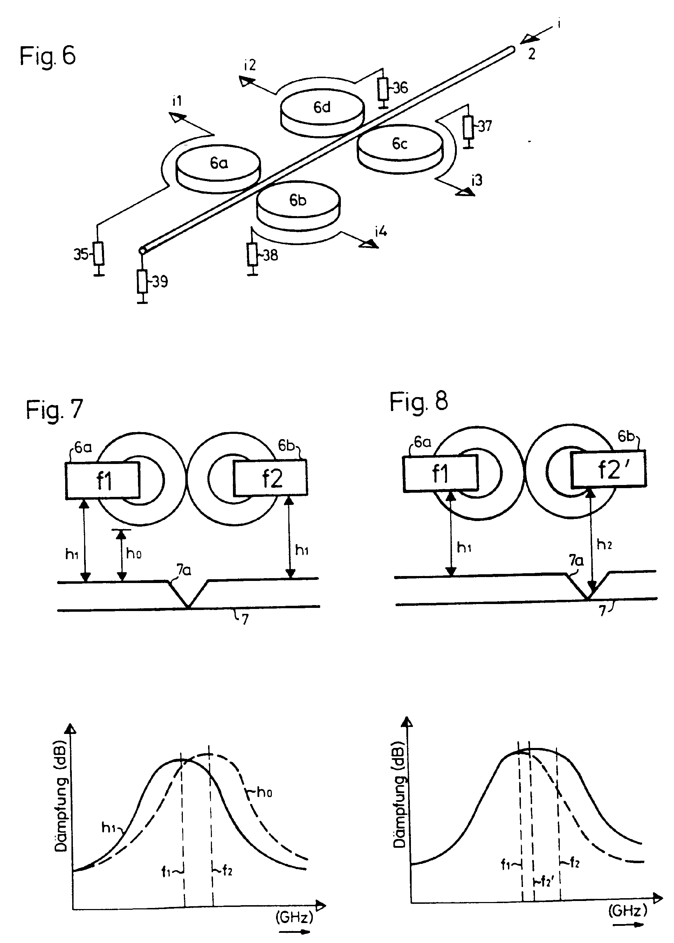

Figur 6 zeigt eine Mehrfachanordnung von Resonatoren 6a, 6b, 6c und 6d. Dabei wird der Verlauf der magnetischen Feldlinien H (Figur 2) uber den Resonatoren 6a bis 6d genutzt, um lageempfindliche Signale zusätzlich zu Abstandssignalen zu erzeugen. Als Beispiel für eine mögliche Mehrfach-Resonator-Anordnung ist in Figur 6 eine Filterschaltung gezeigt, welche eine gemeinsame Erreger-Leitung 2 aufweist. An den Ausgängen $i_1$, $i_2$, $i_3$ und $i_4$ stehen jeweils die verkoppelten Spannungen aus den vier Resonatoren getrennt zur Verfügung, die z.B. mit einer Auswertungsschaltung gemäss Figur 4 entsprechend ausgewertet werden können. Durch Multiplex-Betrieb der Verstärker kann die Anordnung kostengünstig aufgebaut werden. Mit einer solchen Mehrfachanordnung von Resonatoren können durch die Nutzung des charakteristischen Verlaufs der H-Kennlinie der Feldverteilungen richtungsabhängige, parallel zu den Oberflächen der Resonatoren verlaufende Schwerpunkte realisiert werden. Dadurch lässt sich mit einer solchen Anordnung beispielsweise eine Zentrierung über einer Metallspitze oder einem Bolzen herbeiführen, da sich gleicher Zustand der Resonatoren - und damit gleiche Phase - erst dann einstellt, wenn alle Resonatoren 6a bis 6d durch das Objekt in gleicher Weise beeinflusst werden, d.h. wenn das Objekt mittig zwischen den Resonatoren 6a bis 6d angeordnet ist. Zur praktischen Realisierung muss an die Auswertungsschaltung lediglich eine entsprechende Nachführschaltung in bekannter Weise angeschlossen werden.

Die Anordnung der Resonatoren und die Anzahl der Resonatoren richtet sich nach der jeweils gestellten Aufgabe bzw. dem Objekt, dessen Position durch Sensoren erfasst werden soll. Bei Schaltungen mit Mehrfach-Resonatoren können entsprechend der Anzahl der Resonatoren mehrere Schwingschaltungen verwendet werden, die entweder auf einer gemeinsamen Frequenz oder vorzugsweise auf verschiedenen Frequenzen betrieben werden und die je eine frequenz- und/oder phasen- und/oder amplitudenauswertende Auswertungsschaltung besitzen. Eine Auswertungsschaltung kann dabei im Multiplexbetrieb geschaltet sein, d.h. zyklisch an mehrere Resonator-Kreise angeschlossen werden, um den Aufwand für elektronische Schaltmittel zu reduzieren.

Figur 7 zeigt eine Anordnung mit zwei Resonatoren 6a, 6b über einem Körper 7, der im konkreten Fall ein Stahlblech mit einer V-Naht 7a ist.

Beim Ausführungsbeispiel gemäss Figur 7 und 8 ist lediglich der Resonator 6a durch nicht dargestellte Streifenleitungen mit einem ebenfalls nicht dargestellten Oszillator verbunden. Der Resonator 6b ist an den Resonator 6a induktiv angekoppelt. Die Resonatoren 6a und 6b sind auf unterschiedliche Frequenzen f1, f2 abgestimmt. In Figur 7 ist im Diagramm schematisch dargestellt, wie die Durchlassdämpfung der Resonatoren 6a 6b beim Abstand $h_1$ zum metallischen Körper 7 verläuft. Durch Annäherung auf den Abstand $h_0$ verschiebt sich die Durchlass-Kurve, da beide Frequenzen f1 und f2 der Resonatoren 6a und 6b angehoben werden.

Figur 8 zeigt schematisch den Kurvenverlauf bei einem Seiten-Versatz der Resonatoren 6a, 6b über der V-Naht 7a. Ersichtlicherweise bleiben dabei die Bedingungen für den Resonator 6a konstant, was sich durch gleichbleibende Frequenz f1 ausdrückt. Dagegen ändert sich die Frequenz des Resonators 6b, da dieser im Bereich der V-Naht grösseren Abstand zum metallischen Körper 7 aufweist. Dadurch stellt sich die Frequenz f2' ein, wodurch die Durchlass-Kurve den dargestellten gestrichelten Verlauf annimmt.

Die Aenderung des Durchlassverhaltens der Resonatoren gemäss Figur 7 und 8 lässt sich z.B. durch eine analog dem Ausführungsbeispiel gemäss Figur 4 aufgebaute Schaltung auswerten. Z.B. kann durch eine Mehrzahl von frequenzselektiven Schaltungen 15, 16 (Figur 4) die Veränderung des Filterverhaltens überwacht werden. Entsprechende Umsetzung in Positionssignale bzw. Abstandssignale kann durch bekannte Schaltungsanordnungen erreicht werden.

## Patentansprüche

1. Verwendung eines durch Annäherung an einen Körper in seinem Resonanzverhalten veränderbaren, dielektrischen Mikrowellen-Resonators (6), der mit einem ersten abgeschlossenen Wellenleiter (2, 17) an wenigstens einen Oszillator (1) bzw. das aktive Bauteil einer Schwingschaltung angekoppelt ist und der mit einem zweiten abgeschlossenen Wellenleiter (3, 18) an die Schwingschaltung rückgekoppelt oder an eine Auswertungsschaltung (10, 12, 15, 16) angekoppelt ist, als Sensor in einer Anordnung zum Ermitteln der Relativlage des Sensors zu einem Körper (7), wobei der Abschluss-Widerstand der Wellenleiter dem Wellenwiderstand der Leitung entspricht.

2. Verwendung nach Anspruch 1, wobei der Resonator (6) als frequenzbestimmendes Element der Schwingschaltung angeordnet ist.

3. Verwendung nach Anspruch 1, wobei der Resonator (6) als Filter an den Ausgang wenigstens einer Oszillator-Schaltung (1) angeschlossen ist.

4. Verwendung nach Anspruch 3, mit einer Oszillator-Schaltung (1), die wenigstens zwei verschiedene Frequenzen an den Resonator abgibt.

5. Sensorschaltung zur Ermittlung der Relativlage eines Sensors zu einem Körper (7) mit wenigstens einer Anordnung zum Erzeugen von Mikrowellen (1), einem von dieser gespeisten Sensor und einer Auswertungsschaltung (10, 12, 15, 16), dadurch gekennzeichnet, dass als Sensor wenigstens ein dielektrischer Mikrowellen-Resonator (6) vorgesehen ist, der mit einem ersten abgeschlossenen Wellenleiter (2, 17) an wenigstens einen Oszillator (1) bzw. das aktive Bauteil einer Schwingschaltung angekoppelt ist und der mit einem zweiten abgeschlossenen Wellenleiter (3, 18) an die Schwingschaltung rückgekoppelt oder an eine Auswertungsschaltung (10, 12, 15, 16) angekoppelt ist, wobei der Abschluss-Widerstand der Wellenleiter dem Wellenwiderstand der Leitung entspricht.

6. Sensorschaltung nach Anspruch 5, dadurch gekennzeichnet, dass der Resonator (6) einerseits als Filter mittels des ersten abgeschlossenen Wellenleiters (2) an den Ausgang wenigstens eines Oszillators (1) angekoppelt ist und andererseits an eine frequenzselektive und/oder eine amplitudenselektive und/oder phasenselektive Auswertungsschaltung (10, 12, 15, 16) angekoppelt ist.

7. Sensorschaltung nach einem der Ansprüche 5 oder 6, dadurch gekennzeichnet, dass wenigstens zwei Resonatoren (6a, 6b, 6c, 6d) vorgesehen sind.

8. Sensorschaltung nach Anspruch 7, dadurch gekennzeichnet, dass die Resonatoren (6a, 6b, 6c, 6d) direkt oder indirekt miteinander gekoppelt sind.

9. Sensorschaltung nach Anspruch 7 oder 8, dadurch gekennzeichnet, dass die Resonatoren (6a, 6b, 6c, 6d) unterschiedliche Resonanzfrequenz aufweisen.

10. Sensorschaltung nach einem der Ansprüche 5 bis 9, dadurch gekennzeichnet, dass der Mikrowellen-Resonator frequenzbestimmendes Element der Oszillator-Schaltung (1) ist.


**Claims**

1. Use of a dielectric microwave resonator (6) which can be varied in respect of its resonance behaviour by approaching a body and which is coupled with a first terminated waveguide (2, 17) to at least one oscillator (1) or the active component of an oscillating circuit and which with a second terminated waveguide (3, 18) is fed back to the oscillating circuit or is coupled to an evaluation circuit (10, 12, 15, 16), as a sensor in an arrangement for determining the relative position of the sensor with respect to a body (7), wherein the terminal resistance of the waveguides corresponds to the characteristic impedance of the line.

2. Use according to claim 1 wherein the resonator (6) is arranged as the frequency-determining element of the oscillating circuit.

3. Use according to claim 1 wherein the resonator (6) is connected as a filter to the output of at least one oscillator circuit (1).

4. Use according to claim 3 with an oscillator circuit (1) which outputs at least two different frequencies to the resonator.

5. A sensor circuit for determining the relative position of a sensor with respect to a body (7) having at least one arrangement for producing microwaves (1), a sensor which is fed thereby and an evaluation circuit (10, 12, 15, 16) characterised in that provided as the sensor is at least one dielectric microwave resonator (6) which is coupled with a first terminated waveguide (2, 17) to at least one oscillator (1) or the active component of an oscillating circuit and which with a second terminated waveguide (3, 18) is fed back to the oscillating circuit or is coupled to an evaluation circuit (10, 12, 15, 16), wherein the terminal resistance of the waveguides corresponds to the characteristic impedance of the line.

6. A sensor circuit according to claim 5 characterised in that the resonator (6) on the one hand is coupled as a filter by means of the first terminated waveguide (2) to the output of at least one oscillator (1) and on the other hand is coupled to a frequency-selective and/or an amplitude-selective and/or phase-selective evaluation circuit (10, 12, 15, 16).

7. A sensor circuit according to one of claims 5 and 6 characterised in that there are provided at least two resonators (6a, 6b, 6c, 6d).

8. A sensor circuit according to claim 7 characterised in that the resonators (6a, 6b, 6c, 6d) are directly or indirectly coupled together.

9. A sensor circuit according to claim 7 or claim 8 characterised in that the resonators (6a, 6b, 6c, 6d) have different resonance frequencies.

10. A sensor circuit according to one of claims 5 to 9 characterised in that the microwave resonator is a frequency-determining element of the oscillator circuit (1).

**Revendications**

1. Utilisation, comme détecteur dans un dispositif permettant de déterminer la position relative du détecteur par rapport à un corps (7), d'un résonateur diélectrique à micro-ondes (6) dont on peut modifier l'allure de la résonance en le rapprochant du corps et qui est couplé, par un premier guide d'ondes (2,17) à résistance de terminaison, à au moins un oscillateur (1) ou au composant actif d'un circuit oscillant, qui est rétrocouplé, par un second guide d'ondes (3,18) à résistance de terminaison, au circuit oscillant ou qui est couplé à un circuit de traitement (10,12,15,16), étant précisé que la résistance de terminaison des guides d'ondes correspond à l'impédance caractéristique du conducteur.

2. Utilisation selon la revendication 1, pour laquelle le résonateur (6) est utilisé en tant qu'élément de détermination de la fréquence du circuit oscillant.

3. Utilisation selon la revendication 1, pour laquelle le résonateur (6) est relié en tant que filtre à la sortie d'au moins un circuit oscillant (1).

4. Utilisation selon la revendication 3, avec un circuit oscillant (1) qui délivre au moins deux fréquences différentes au résonateur.

5. Circuit détecteur pour déterminer la position relative d'un détecteur par rapport à un corps (7), comportant au moins un dispositif pour produire des micro-ondes (1), un détecteur alimenté par ce dispositif et un circuit de traitement (10,12,15,16), caractérisé en ce que comme détecteur il est prévu au moins un résonateur diélectrique à micro-ondes (6) qui est couplé, par un premier guide d'ondes (2,17) à résistance de terminaison, à au moins un oscillateur (1) ou au composant actif d'un circuit oscillant, et qui est rétrocouplé, par un second guide d'ondes (3,18) à résistance de terminaison, au circuit oscillant, ou qui est couplé à un circuit de traitement (10,12,15,16), étant précisé que la résistance de terminaison des guides d'ondes correspond à l'impédance caractéristique du conducteur.

6. Circuit détecteur selon la revendication 5, caractérisé en ce que le résonateur (6) est couplé d'une part, en tant que filtre, au moyen du premier guide d'ondes (2) à résistance de terminaison, à la sortie d'au moins un oscillateur (1) et est couplé d'autre part à un circuit de traitement (10,12,15,16) sélectif à l'égard de la fréquence et/ou à l'égard de l'amplitude et ou à l'égard de la phase.

7. Circuit détecteur selon l'une des revendications 5 ou 6, caractérisé en ce qu'au moins deux résonateurs (6a, 6b, 6d) sont prévus.

8. Circuit détecteur selon la revendication 7, caractérisé en ce que les résonateurs (6a, 6b, 6c, 6d) sont couplés directement ou indirectement l'un avec l'autre.

9. Circuit détecteur selon la revendication 7 ou 8, caractérisé en ce que les résonateurs (6a, 6b, 6c, 6d) présentent une fréquence de résonance différente.

10. Circuit détecteur selon l'une des revendications 5 à 9, caractérisé en ce que le résonateur à micro-ondes est l'élément de détermination de la fréquence du circuit oscillant (1).

Fig. 1

Fig. 2

Fig. 3

Fig. 4

Fig. 5

Fig. 6

Fig. 7

Fig. 8